# EUROPEAN PATENT APPLICATION

(11) **EP 1 793 465 A1**
(43) Date of publication of application: **06.06.2007**
(21) Application number: 05425852.0
(22) Date of filing: 30.11.2005
(51) Int. Cl.: H02H 3/33

(54) **Electronic differential switch**

(71) Applicant: STMicroelectronics S.r.l., 20041 Agrate Brianza (Milano) (IT)
(72) Inventor: Aiello, Natale, 95039 Trecastagni (Catania) (IT)
(74) Representative: Ferrari, Barbara

(57) **Abstract**

An electronic differential switch (20) of the type connected to at least one phase cable (L1) and to one neutral cable (L2) of an electric network and comprising at least one toroid (2) associated with a first winding (W1) in turn associated with a second winding (W2) is described, the second winding (W2) being associated with a driving relay (3) of a main switch (T), in turn connected to the phase and neutral cables (L1, L2). The first and second windings (W1, W2) are connected to each other through the series of a measuring and driving integrated circuit (8) and of a bridge of diodes (7), the measuring and driving integrated circuit (8) being apt to measure a differential current flowing in the first winding (W1) and to generate a driving signal. Advantageously according to the invention, the electronic differential switch comprises at least one driven switch (21) connected to the integrated circuit (8) and driven thereby by means of the driving signal and connected to the relay (3) by means of the bridge of diodes (7), the driven switch (21) exciting, respectively, releasing the relay (3), which in turn closes, respectively, opens the main switch (T).

A method is also described for controlling an alarming condition in an electric network comprising at least one phase cable (L1) and one neutral cable (L2) associated with a main switch (T) and connected to an electronic differential switch (20).

## Description

### Field of application

The present invention relates to an electronic differential switch.

More specifically the invention relates to an electronic differential switch of the type connected to at least one phase cable and to a neutral cable of an electric network and comprising at least one toroid associated with a first winding in turn associated with a second winding, said second winding being associated with a driving relay of a main switch, in turn connected to said phase and neutral cables, said first and second windings being connected to each other through the series of a measuring and driving integrated circuit and of a bridge of diodes, said measuring and driving integrated circuit being suitable for measuring a differential current flowing in said first winding and for generating a driving signal.

The invention also relates to a method for controlling an alarming condition in an electric network comprising at least one phase cable and one neutral cable associated with a main switch and connected to an electronic differential switch.

### Prior art

As it is well known, differential switches are components widely used as protection instruments in buildings ad/or industrial plants (commonly called automatic cut-out) or as instruments for verifying the correct use of electric supplies (for example, as anti tampers in electronic meters).

In particular, a differential switch is connected to the cables conducting the electric current, usually indicated as phase and neutral. In general, the current enters through the phase, it crosses the circuits of the system connected to the differential switch and it goes out from the neutral.

Under normal conditions the entering current must be equal to the one going out. If this does not occur it means that a part thereof is crossing different paths, as the human body in case of electric shock (direct contact) or dispersion paths due to the insulator failure, for example, of a household appliance connected to an earth system.

The differential switch thus continuously compares the entering current with the one going out and it intervenes when it detects a difference of current, index of an "alarming" event.

At present, there exist two big categories of differential switches:
- the differential switches called electromechanical, based on a mechanical system for the activation of the switch in the presence of the alarming event;
- the differential switches called electronic, which use an electronic circuit for the detection of the alarming event and the activation of the switch.

Especially when used as protection instruments, human life being possibly at stake, these differential switches require particular safety guarantees which minimise the likelihood of missed intervention due to a possible failure of the switch itself.

All the differential switches on sale also have a "test" button (usually indicated with a letter T stamped on it) for verifying the functionalities of the switch itself by generating a leakage current inside the circuit architecture which realises the switch.

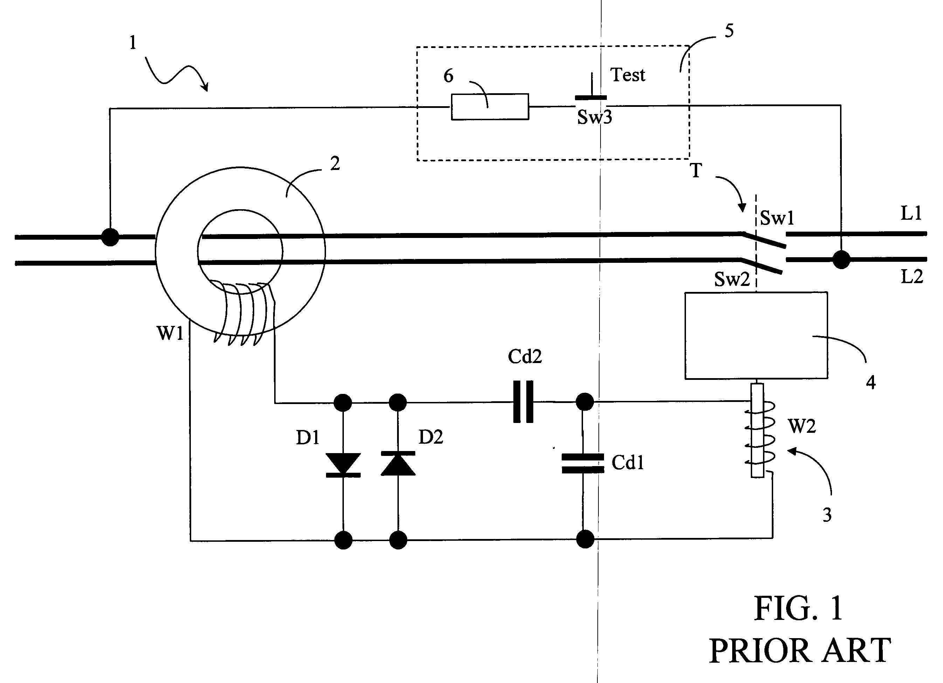

A differential switch of the electromechanical type as available on sale is shown in Figure 1, globally and schematically indicated with 1.

In particular, the electromechanical differential switch 1 comprises a toroid 2 wherein cables of an electric network are inserted, in particular a phase cable L1 and a neutral cable L2.

The toroid 2 is associated with a first winding W1 in turn connected, through a first decupling capacitor Cd1, to a second winding W2, this latter being associated with a relay 3, in turn connected to a driving mechanical system 4 of a pair of switches Sw1, Sw2 connected to the phase L1 and neutral L2 cables, respectively. The switches Sw1, Sw2 are also globally indicated as main switch T. In substance, the first winding W1 is the winding measuring the differential current while the second winding W2 is the winding exciting the relay 3.

The electromechanical differential switch 1 also comprises a pair of diodes D1, D2 - in opposite configuration the one with respect to the other - and the first decoupling capacitor Cd1 inserted in parallel to the windings W1 and W2, as well as a second decoupling capacitor Cd2 inserted in series between the pair of diodes D1, D2 and the first decoupling capacitor Cd1.

The electromechanical differential switch 1 finally comprises a test circuit 5 inserted between the phase cable L1 and the neutral cable L2 and including the series of a resistance 6 and of a test switch Sw3 associated with a test button of the switch itself, schematised by means of a test driving signal Test.

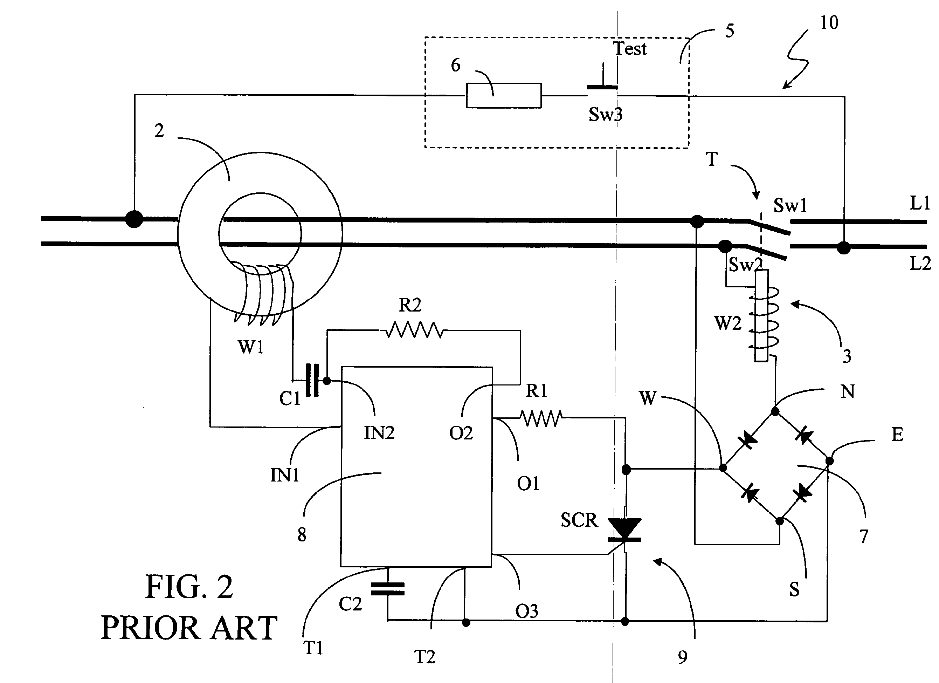

An electronic differential switch of the type schematically shown in Figure 2, globally indicated with 10, is also known. Elements being structurally and/or functionally identical to the electromechanical differential switch 1 described with reference to Figure 1 will be given the same reference numbers for sake of simplicity.

The electronic differential switch 10 comprises a toroid 2 wherein a phase cable L1 and a neutral cable L2 of an electric network are inserted.

The toroid 2 is associated with a first winding W1 in turn connected to an integrated circuit 8 which is in turn connected to a diode 9 SCR which drives a second winding W2, this latter being associated with a relay 3. The relay 3 directly drives a pair of switches Sw1, Sw2 connected to the phase L1 and neutral L2 cables, respectively. The switches Sw1, Sw2 are also globally indicated as main switch T.

In this case, the second winding W2 has a first end directly connected to the neutral cable L2 and a second end connected to the phase cable L1 by means of a bridge 7 of diodes.

In particular, the bridge 7 of diodes has respective first N, second E, third S and fourth W terminal, the first terminal N being connected to the second end of the second winding W2 and the third terminal S being connected to the phase cable L1.

The electronic differential switch 10 also comprises the integrated circuit 8 for measuring a differential current , inserted between the first winding W1 and the diode 9 SCR (acronym of the English "Silicon Controller Rectifier").

In particular, the integrated circuit 8 has a first input terminal IN1 directly connected to a first end of the first winding W1 and a second input terminal IN2 connected to a second end of the first winding W1 by means of a first capacitor C1, as well as a first output terminal O1 connected to a first end of the diode 9 SCR by means of a first resistor R1, a second output terminal 02 feedback connected to the second input terminal IN2 by means of a second resistor R2 and a third output terminal 03 connected to a driving terminal of the diode 9 SCR.

The integrated circuit 8 also has a first biasing terminal T1 connected to the second terminal E of the bridge 7 of diodes by means of a second capacitor C2 for timing the system intervention and a second biasing terminal T2 also connected to the second terminal E of the bridge 7 of diodes. In particular, the second terminal E is connected to a ground voltage reference GND.

The diode 9 SCR has a first end connected to the fourth terminal W of the bridge 7 of diodes (and thus to the first output terminal O1 of the integrated circuit 8 by means of the first resistor R1) and a second end connected to the second terminal E of the bridge 7 of diodes (and thus to the first biasing terminal T1 of the integrated circuit 8 by means of the second capacitor C2 as well as to the second biasing terminal T2 of the integrated circuit 8).

The differential switch 10 finally comprises a test circuit 5 inserted between the phase cable L1 and the neutral cable L2 and including the series of a resistance 6 and of a test switch Sw3 associated with a test button of the switch itself, schematised by means of a test driving signal Test. In particular, the value of the resistance 6 determines the simulated failure current.

It is to be noted that the integrated circuit 8 measures a differential current correlated to the currents IF and IN flowing in the phase L1 and neutral L2 cables, respectively.

In particular, if the current IF circulating in the phase cable L1 is equal to the current I_{N} flowing back through the neutral cable L2, i.e. if the condition I_{F}-I_{N}=0 occurs, there is no linked flow in the toroid 2 inducing a void voltage in the first winding W1, and consequently the second winding W2 will not be excited by the diode 9 SCR.

Under these conditions, the integrated circuit 8, detecting no voltage difference at its input terminals IN1 and IN2 (which are connected to the first winding W1), maintains the diode 9 SCR off by means of a suitable voltage value applied thereto by means of the third output terminal 03. In this way the relay 3 is not excited and the main switch T (connected to the diode 9 SCR through the bridge 7 of diodes) remains closed.

If, for any reason, a current leakage to ground occurs downstream of the electronic differential switch 10, the difference between the two currents IF and IN circulating in the phase L1 and neutral L2 cables is different from zero with consequent presence of a linked flow in the toroid 2 and thus non void voltage variation at the terminals of the first winding W1. This voltage variation is applied at the input terminals IN 1 and IN2 of the integrated circuit 8, which, after a prefixed time determined by the second capacitor C2, activates the diode 9 SCR through its third output terminal 03 with consequent excitation of the relay 3 and opening of the main switch T.

This condition remains until the electronic differential switch 10 is reset from the outside.

Although advantageous under several aspects, this first solution has however several drawbacks, among which:
1) it does not ensure the intervention of the electronic differential switch 10. In fact, the only way to verify the operation of the switch itself is that of activating the "test" button and thus the test circuit 5, ensuring that the switch does not fail after the execution of this test operation being not possible; electromechanical differential switches also have this drawback;
2) in case of accidental intervention of the electronic differential switch 10 due to a sudden alarming event (such as the fall of a lightning), the protected condition of the main switch release remains also after the end of the alarming event. In particular, an electronic differential switch 10 of the known type is not able, unless it uses more complex systems, to distinguish between a real failure current and one due to an external disturbance or noise which is introduced into the controlled system, with consequent problems in case of protections inserted in the presence of electric apparatuses requiring a continuous supply, such as for example cold stores can be.

The technical problem underlying the present invention is that of providing an architecture apt to realise an electronic differential switch able to ensure a correct breakdown of the switch in case of failure and in the meantime to allow the automatic reset of the same in case of termination of the alarming event thus overcoming the limits and the drawbacks still affecting the differential switches realised according to the prior art.

### Summary of the invention

The solution idea underlying the present invention is that of inverting the driving logic of the switches connected to the electric network cables controlled by the differential switch.

On the basis of this solution idea the technical problem is solved by an electronic differential switch as previously indicated and defined by the characterising part of claim 1.

The problem is also solved by a method for controlling an alarming condition as previously indicated and defined by the characterising part of claim 10.

The characteristics and the advantages of the electronic differential switch and of the control method according to the invention will be apparent from the following description of embodiments thereof given by way of indicative and non limiting examples with reference to the annexed drawings.

### Brief description of the drawings

In these drawings:
Figure 1 schematically shows a differential switch of the electromechanical type realised according to the prior art;
Figure 2 schematically shows a differential switch of the electronic type realised according to the prior art;
Figure 3 schematically shows a differential switch of the electronic type realised according to the invention;
Figure 4 schematically shows a further embodiment of the electronic differential switch of Figure 3;
Figure 5 schematically shows a preferred embodiment of the electronic differential switch of Figure 3; and
Figure 6 schematically shows a preferred embodiment of the electronic differential switch of Figure 4.

### Detailed description

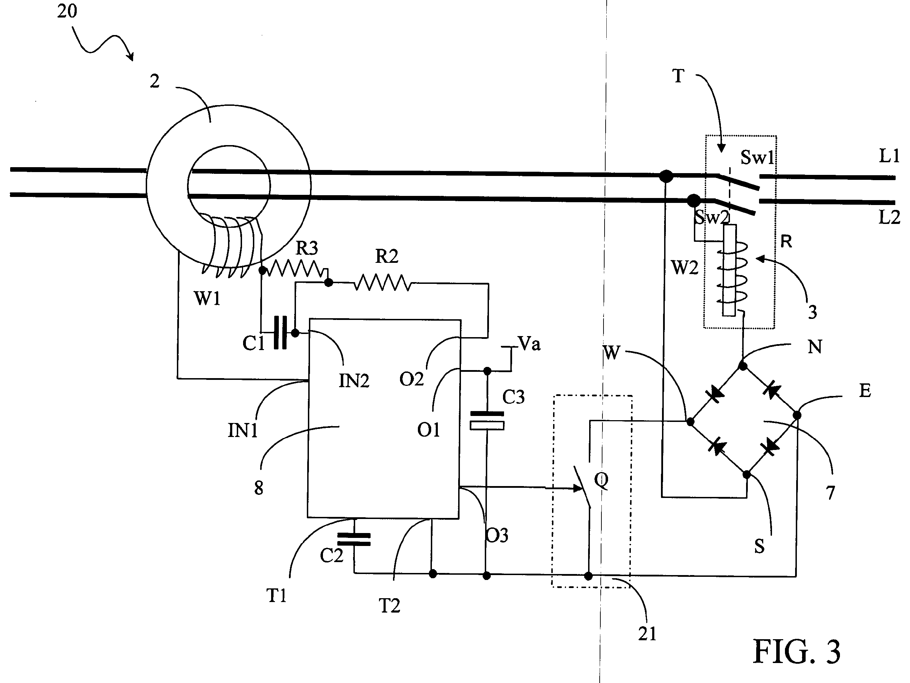

With reference to these figures, and in particular to Figure 3, an electronic differential switch realised according to the present invention is described, globally and schematically indicated with 20.

Elements being structurally and/or functionally identical to the electronic differential switch 10 described with reference to the prior art and shown in Figure 2 will be given the same reference numbers for sake of simplicity.

The electronic differential switch 20 according to the invention comprises a toroid 2 wherein a phase cable L1 and a neutral cable L2 of an electric network are inserted.

The toroid 2 is associated with a first winding W1 in turn associated with a second winding W2, this latter being associated with a relay 3. The relay 3 directly drives a pair of switches Sw1, Sw2 connected to the phase L1 and neutral L2 cables, respectively. The switches Sw1, Sw2 are also globally indicated as main switch T.

As it has been seen for the electronic differential switch 10 realised according to the prior art, the second winding W2 has a first end directly connected to the neutral cable L2 and a second end connected to the phase cable L1 by means of a bridge 7 of diodes.

In particular, the bridge 7 of diodes has respective first N, second E, third S and fourth W terminals, the first terminal N being connected to the second end of the second winding W2 and the third terminal S being connected to the phase cable L1.

The electronic differential switch 20 also comprises a measuring and driving integrated circuit 8 connected to the first winding W1, apt to measure a differential current flowing in the first winding W1 and to generate a suitable driving signal. In particular, advantageously according to the invention, the electronic differential switch 20 also comprises a driven switch 21 driven by the integrated circuit 8 and connected to the bridge 7 of diodes, in particular between its fourth W and second E terminals.

The integrated circuit 8 has a first input terminal IN 1 directly connected to a first end of the first winding W1 and a second input terminal IN2 connected to a second end of the first winding W1 by means of a first capacitor C1, as well as a first output terminal O1 connected to a first end of a supply capacitor C3 inserted between a supply voltage reference Va and the second terminal E of the bridge 7 of diodes.

The integrated circuit 8 also has a second output terminal 02 feedback connected to the second input terminal IN2 by means of a first resistor R2 and a third output terminal 03 connected to a control terminal of the driven switch 21.

Finally, the integrated circuit 8 has a first biasing terminal T1 connected to the second terminal E of the bridge 7 of diodes by means of a second capacitor C2 and a second biasing terminal T2 also connected to the second terminal E of the bridge 7 of diodes.

The electronic differential switch 20 further comprises a second resistor R3 inserted in parallel to the first capacitor C1 between the first winding W1 and the first resistor R2.

Advantageously according to the invention, the main switch T has a stand-by position, i.e. an open condition corresponding to the rest condition with non-excited solenoid of the relay 3, as shown in the example illustrated in Figure 3.

In particular, it is to be noted that the circuit architecture proposed for the electronic differential switch 20 according to the present invention, ensures, in this way, the above indicated safety conditions thanks to the inversion of the driving logic governing the operation of the switch itself.

In particular the state of the driven switch 21 is always controlled by the integrated circuit 8 (no latch), while the relay 3 has a rest condition (corresponding to the condition of non-excited solenoid) with the main switch T - i.e. the switches Sw1 and Sw2 - open.

Advantageously, the electronic differential switch 20 implements a method for controlling an alarming condition in an electric network comprising at least one phase cable L1 and one neutral cable L2 associated with a main switch T and comprising the following steps:
- a closing step of the main switch T by means of a closure of the driven switch 21 by the integrated circuit 8 in the absence of an alarming condition;
- an opening step of the main switch T by means of an opening of the driven switch 21 by the integrated circuit 8 in the presence of an alarming condition; as well as
- a reset step of the electronic differential switch 20 with automatic resetting of the initial conditions once the alarming condition ends, said reset step providing a closure of the main switch. T by means of a closure of the driven 21 by the integrated circuit 8.

Advantageously according of the invention, the method further provides a maintenance step wherein the main switch T is maintained open for the whole duration of the alarming condition by the driven circuit 21, in turn kept open by the integrated circuit 8.

In particular, if no alarming condition is detected - i.e. if the current IF circulating in the phase cable L1 is equal to the current IN flowing back through the neutral cable L2 (I_{F}-I_{N}=0), there is no linked flow in the toroid 2 (in particular in its first winding W1) and the integrated circuit 8, detecting no voltage difference at its input terminals IN1 and IN2 (which are connected to the first winding W1), maintains the driven switch 21 closed with consequent excitation of the relay 3 and closure of the main switch T.

On the contrary, if there is an alarming condition corresponding to the presence of a differential current detected at the inputs IN 1 and IN2 of the integrated circuit 8, it opens the driven circuit 21, de-exciting the relay 3 which goes back to its rest condition (main switch T open).

Suitably, this driven switch 21 is maintained open by the integrated circuit 8 for the whole duration time of the alarming condition or failure. In this case, also the main switch T remains open for the whole duration of the alarming condition.

Advantageously according to the invention, once the alarming condition ends (for example in the case of differential currents due to accidental causes such as the fall of lightnings), the main switch T is closed again by the driven switch 21, with an automatic resetting of the initial conditions. In substance, thanks to the electronic differential switch 20 realised according to the invention it is possible to obtain, in a very simple way, an automatic reset of the switch itself.

It is to be noted that the electronic differential switch 20 also ensures the safety of the system whereto it is connected in most cases of failure of the switch itself.

In fact, in case of failure of the integrated circuit 8 or in case of disconnection of a cable (phase cable L1 or neutral case L2) with loss of the references by the integrated circuit 8 itself and consequent unreliability of the electronic differential switch 20, the driven switch 21 is not driven, with subsequent automatic deactivation of the main switch T as guarantee of the safety for the one downstream of the electronic differential switch 20 itself.

However it is not possible to ensure the opening of the main switch T when the driven switch 21 fails, creating a short circuit.

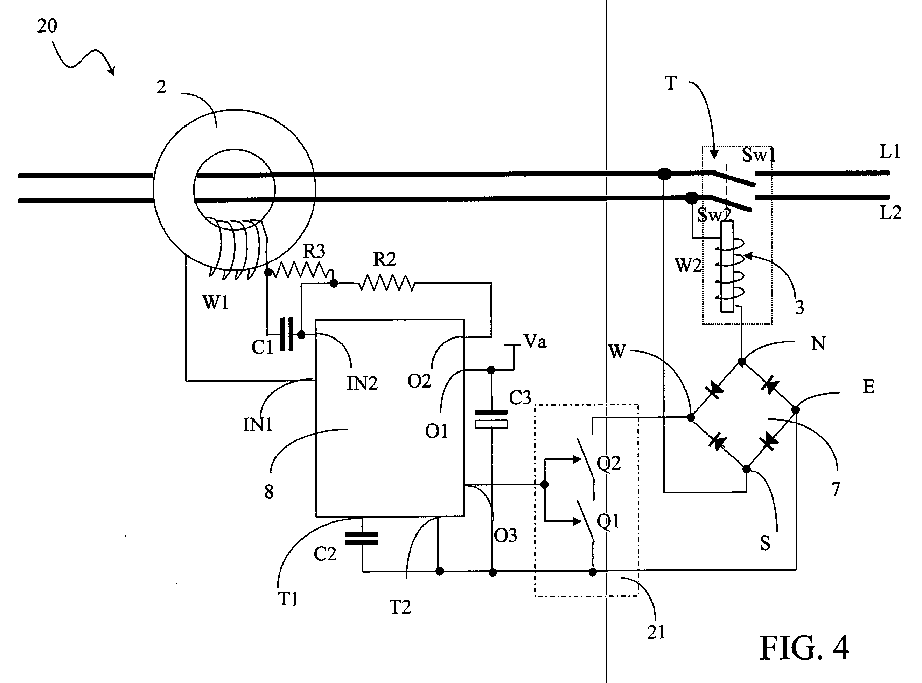

Advantageously according to the invention, it is possible to modify the architecture of the electronic differential switch 20 so as to solve also this failure condition, as schematically shown in Figure 4.

In particular, according to this embodiment of the electronic differential switch 20 according to the invention, the driven switch 21 comprises the cascade of two switches Q1 and Q2, both provided with a control terminal connected to the third output terminal 03 of the integrated circuit 8.

In this case, the possibility that both switches Q1 and Q2 are short-circuited in the same instant is negligible, and the electronic differential switch 20 thus realised always ensures safety conditions for the users downstream thereof.

Moreover, according to a preferred embodiment of the electronic differential switch 20, it is possible to introduce application requirements such as the turn-on of suitable leds connected to the electronic differential switch 20 so as to have an indication on the real leakage current measured thereby.

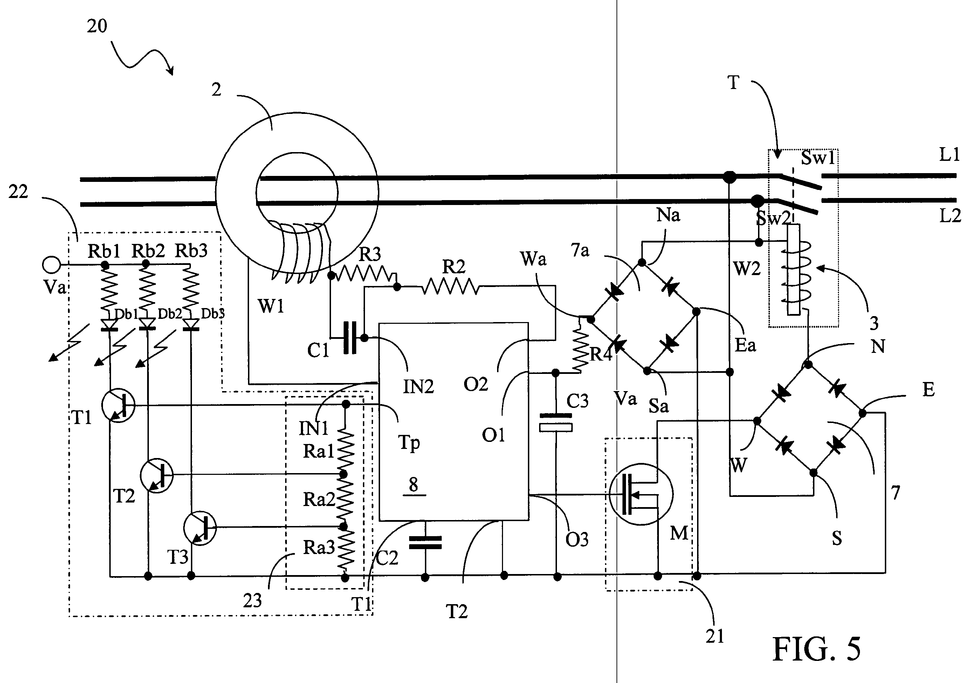

Such a preferred embodiment of the electronic differential switch 20 shown in Figure 3 is schematically shown in Figure 5.

In this case, the electronic differential switch 20 comprises a led driving circuit, globally and schematically indicated with 22.

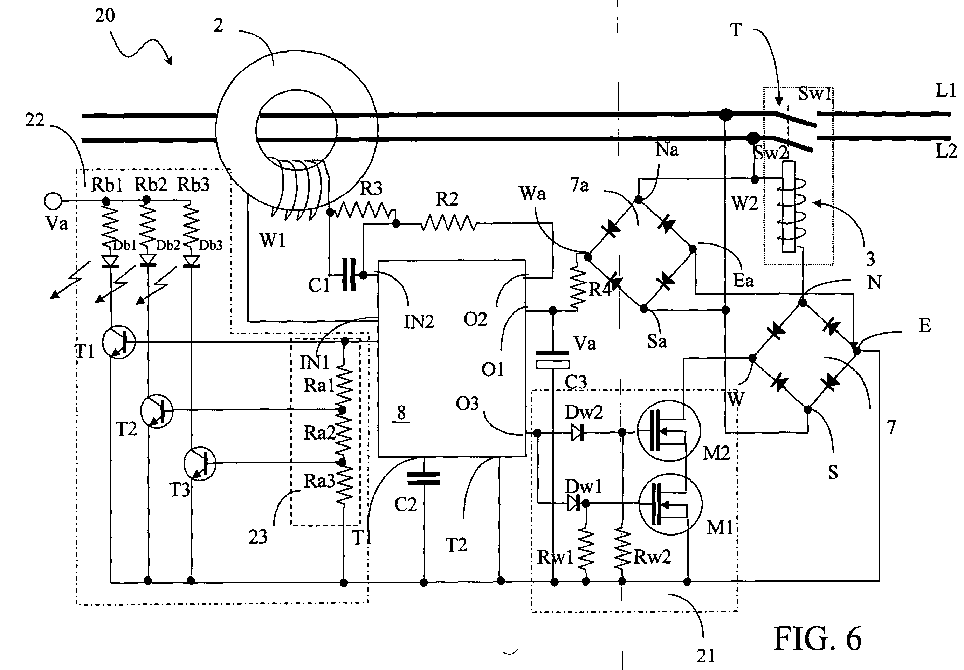

The led driving circuit 22 comprises a resistive divider 23, in the example shown in Figure 6 connected between a further driving terminal Tp of the integrated circuit 8 and the second terminal E of the bridge 7 of diodes and including a first Ra1, a second Ra2 and a third Ra3 resistor, connected to a plurality of transistors T1, T2, T3, in turn connected, by means of the series of respective diodes D1, D2, D3 and further resistive elements Rb1, Rb2, Rb2 to the supply reference Va. The transistors T1, T2, T3 are the leds driven by the led driving circuit 22.

The electronic differential switch 20 of the example of Figure 5 comprises a MOS transistor M apt to realise the driven switch 21. The MOS transistor M has a control terminal connected to the third output terminal 03 of the integrated circuit 8. Naturally it is possible to use, in an equivalent way, switches of different nature such as IGBT, Bipolar etc..

The electronic differential switch 20 also comprises a second bridge 7a of diodes apt to realise a supply voltage of the integrated circuit 8 in an independent way with respect to the state of the system (the main switch T being open or closed). In particular, the second bridge 7a of diodes has respective first Na, second Ea, third Sa and fourth Wa terminals, the first terminal Na being connected to the second end of the second winding W2, the second terminal Ea being connected to the second terminal E of the bridge 7 of diodes and the third terminal Sa being connected to the third terminal S of the bridge 7 of diodes.

Finally, the fourth terminal Wa of the second bridge 7a of diodes is connected, by means of a third resistor R4 to the first output terminal of the integrated circuit 8.

In substance, the preferred embodiment of the electronic differential switch 20 according to the invention comprises resistors and capacitors apt to supply the integrated circuit 8 and to create suitable delays useful for the inner functions of the switch itself.

Similarly, Figure 6 schematically shows a preferred embodiment of the electronic differential switch 20 of Figure 4.

In this case, the driven switch 21 comprises a first M1 and a second MOS transistor M2 apt to implement the switches Q1 and Q2 of Figure 4, suitably connected to the third output terminal 03 of the integrated circuit 8 and to the second terminal E of the bridge 7 of diodes by means of respective diodes, Dw1 and Dw2, and disconnecting resistors, Rw1 and Rw2. In particular, these diodes, Dw1 and Dw2, and disconnecting resistors, Rw1 and Rw2, ensure, in any case, the turn-off of the transistors MOS M 1 and M2 and avoid, in case of failure of one of them, the damage of the other or of the integrated circuit 8 through a conductive path of the gate terminal.

Even in this case, to realise the switches Q1 and Q2 it is possible to use, in an equivalent way, switches of different nature such as IGBT, Bipolar etc..

In the examples shown in Figures 4-6, the main switch T is always shown in its open position, corresponding to the rest condition of the relay 3.

In conclusion, the electronic differential switch 20 according to the invention ensures the safety conditions necessary for a differential switch thanks to the inversion of the driving logic governing its operation.

To do all this, the electronic differential switch 20 comprises a switch driven by the integrated circuit 8 and a relay 3 having a stand-by rest condition wherein the main switch T connected to the cables of the network with which the differential switch is associated is open.

In this way, in the absence of an alarming condition (for example a failure) the integrated circuit maintains the driven switch 21 closed with subsequent excitation of the relay 3 and closure of the main switch T.

On the contrary, in the presence of an alarming condition the integrated circuit 8 opens the driven switch 21 and maintains it open for the whole duration time of the alarming condition or failure, thus maintaining also the main switch T open.

Advantageously according to the invention, once the alarming condition ends (for example in case of differential currents due to accidental causes such as the fall of lightnings), the main switch T is opened again by the driven switch 21, with an automatic resetting of the initial conditions.

In substance, the electronic differential switch 20 realised according to the invention realises, in a very simple way, a switch with automatic reset.

As already previously seen, the electronic differential switch 20 according to the invention also ensures the safety of the system whereto it is connected in the cases of failure of the switch itself, such as in case of failure of the integrated circuit 8 or in case of disconnection of a cable (phase cable L1 or neutral cable L2), ensuring the safety for the one downstream of the electronic differential switch 20 itself.

Moreover, the differential switch 20 is not in need of a test circuit inserted between the phase cable L1 and the neutral cable L2 since it is able to test itself automatically and it opens by itself if there is a malfunction.

In its embodiment of Figure 4, the electronic differential switch 20 maintains safety conditions also in case of malfunction of the driven switch 21 contained therein, thanks to the cascade of two switches, the possibility that both the switches are short-circuited in the same instant being negligible.

## Claims

1. Electronic differential switch (20) of the type connected to at least one phase cable (L1) and one neutral cable (L2) of an electric network and comprising at least one toroid (2) associated with a first winding (W1) in turn associated with a second winding (W2), said second winding (W2) being associated with a driving relay (3) of a main switch (T), in turn connected to said phase and neutral cables (L1, L2), said first and second windings (W1, W2) being connected to each other through the series of a measuring and driving integrated circuit (8) and of a bridge of diodes (7), said measuring and driving integrated circuit (8) being apt to measure a differential current flowing in said first winding (W1) and to generate a driving signal **characterised in that** it comprises at least one driven switch (21) connected to said integrated circuit (8) and driven thereby by means of said driving signal and connected to said relay (3) by means of said bridge of diodes (7), said driven switch (21) exciting, respectively, releasing said relay (3), which in turn closes, respectively, opens said main switch (T).

2. Electronic differential switch (20) according to claim 1, **characterised in that** said main switch (T) has an open stand-by position corresponding to a non excited rest condition of said relay (3).

3. Electronic differential switch (20) according to claim 1, **characterised in that** said driven switch (21) comprises an elemental switch (Q) realised by a transistor (M) having a control terminal connected to said measuring and driving integrated circuit (8) and receiving therefrom said driving signal.

4. Electronic differential switch (20) according to claim 1, **characterised in that** said driven switch (21) comprises at least one first and one second elemental switch (Q1, Q2) realised by means of a first and a second transistor (M1, M2), connected, in series to each other, to said bridge of diodes (7) and having respective control terminals connected to said measuring and driving integrated circuit (8) and receiving therefrom said driving signal.

5. Electronic differential switch (20) according to claim 4, **characterised in that** said driven switch (21) further comprises respective first and second decoupling diodes (Dw1, Dw2) inserted between said measuring and driving integrated circuit (8) and said control terminals of said transistors (M1, M2) as well as respective first and second decoupling resistors (Rw1, Rw2) inserted between said control terminals of said transistors (M1, M2) and said bridge of diodes (7).

6. Electronic differential switch (20) according to claim 1, **characterised in that** it further comprises a supply capacitor (C3) connected to a supply voltage reference (Va), to said measuring and driving integrated circuit (8) as well as to said bridge of diodes (7).

7. Electronic differential switch (20) according to claim 1, **characterised in that** it further comprises a led driving circuit (22) connected to said measuring and driving integrated circuit (8).

8. Electronic differential switch (20) according to claim 1, **characterised in that** it comprises a further bridge of diodes (7a) inserted between said relay (3) and said bridge of diodes (7) and connected to said measuring and driving integrated circuit (8).

9. Method for controlling an alarming condition in an electric network comprising at least one phase cable (L1) and one neutral cable (L2) associated with a main switch (T) and connected to an electronic differential switch (20) of the type comprising at least one driving relay (3) of said main switch (T) and one measuring and driving integrated circuit (8) connected to said relay (3) by means of a switch (21) driven by means of a driving signal generated by said measuring and driving integrated circuit (8), said driven switch (21) exciting, respectively, releasing said relay (3), which in turn closes, respectively, opens said main switch (T), the method comprising the following steps:
• a closing step of the main switch (T) by means of a closure of said driven switch (21) by said measuring and driving integrated circuit (8) in the absence of said alarming condition;
• an opening step of the main switch (T) by means of an opening of said driven switch (21) by said measuring and driving integrated circuit (8) in the presence of said alarming condition; as well as
• a reset step of the electronic differential switch (20) with automatic resetting of the initial conditions once said alarming condition ends, said reset step providing a closure of said main switch (T) by means of a closure of said driven switch (21) by said measuring and driving integrated circuit (8).

10. Control method according to claim 9, **characterised in that** it further comprises a maintenance step wherein said main switch (T) is maintained open for the whole duration of said alarming condition by said driven switch (21), in turn maintained open by said measuring and driving integrated circuit (8).
